(19) **Europäisches Patentamt**
**European Patent Office**
**Office européen des brevets**

(11) **EP 4 752 983 A1**

(12) **EUROPEAN PATENT APPLICATION**
published in accordance with Art. 153(4) EPC

(43) Date of publication:
**03.06.2026 Bulletin 2026/23**

(51) International Patent Classification (IPC):
**H01M 4/62** (2006.01) **H01M 4/13** (2010.01)
**H01M 4/139** (2010.01)

(21) Application number: **24845503.2**

(52) Cooperative Patent Classification (CPC):
Y02E 60/10

(22) Date of filing: **17.07.2024**

(86) International application number:
**PCT/JP2024/025665**

(87) International publication number:
**WO 2025/023124 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.07.2023 JP 2023122890**

(71) Applicant: **Mitsui Chemicals, Inc.**
**Tokyo 104-0028 (JP)**

(72) Inventors:
• **MIZUNO, Yu**
**Sodegaura-shi, Chiba 299-0265 (JP)**
• **SUGIHARA, Yuri**
**Sodegaura-shi, Chiba 299-0265 (JP)**
• **FANG, Nan**
**Sodegaura-shi, Chiba 299-0265 (JP)**

(74) Representative: **J A Kemp LLP**
**80 Turnmill Street**
**London EC1M 5QU (GB)**

(54) **ELECTRODE COMPOSITION, ELECTRODE, AND BATTERY**

(57) A composition for an electrode of the disclosure includes a polymer (A). The polymer (A) includes a structural unit (a). The structural unit (a) is derived from a compound that has a five-membered or six-membered nitrogen-containing heterocyclic structure containing an unsaturated bond. A ratio of the structural unit (a) in the polymer (A) with respect to a total amount of all structural units constituting the polymer (A) is higher than 50% by mole.

FIG.1

EP 4 752 983 A1

**Description**

TECHNICAL FIELD

The present disclosure relates to a composition for an electrode, an electrode, and a battery.

BACKGROUND ART

Lithium ion secondary batteries have been attracting attention as high-energy-density batteries.

Patent Document 1 discloses a coating liquid used for the production of a battery electrode. The coating liquid disclosed in Patent Document 1 contains a solvent, a binder, a carbon-based material, and a polymer having a nitrogen-containing five-membered ring structure. The content of the polymer is from 1 ppm to 10,000 ppm with respect to a total mass of the coating liquid. As the polymer, Patent Document 1 specifically discloses a copolymer of polyvinylpyrrolidone and polyvinylimidazole (monomer ratio = 50:50). The coating liquid disclosed in Patent Document 1 is used as a raw material for an electrode material layer of a battery.

Patent Document 1: Japanese Patent Application Laid-Open (JP-A) No. 2004-63423

SUMMARY OF THE INVENTION

Technical Problem

In batteries, there is a demand for a composition for an electrode that can inhibit an increase in the resistance after long-term (e.g., 28 days) storage in a high-temperature environment (e.g., 60°C) (hereinafter, also referred to as "resistance after high-temperature storage").

In view of the above-described circumstances, an object of the disclosure is to provide: a composition for an electrode capable of inhibiting an increase in the resistance of a battery after high-temperature storage; an electrode; and a battery.

Solution to Problem

Means to solve the above-described problems include the following embodiments.

<1> A composition for an electrode, comprising a polymer (A), wherein:

the polymer (A) comprises a structural unit (a) derived from a compound that has a five-membered or six-membered nitrogen-containing heterocyclic structure containing an unsaturated bond, and
a ratio of the structural unit (a) in the polymer (A) with respect to a total amount of all structural units constituting the polymer (A) is higher than 50% by mole.

<2> The composition for an electrode according to <1>, wherein the ratio of the structural unit (a) is 60% by mole or higher.

<3> The composition for an electrode according to <1> or <2>, wherein the structural unit (a) contains a structural unit derived from vinylimidazole.

<4> The composition for an electrode according to any one of <1> to <3>, further comprising an active material (B) and a binder (C).

<5> The composition for an electrode according to <4>, wherein the active material (B) contains a carbon-based compound.

<6> The composition for an electrode according to any one of <1> to <5>, wherein a content of the polymer (A) is from 0.01% by mass to 1.0% by mass with respect to a solid content of the composition for an electrode.

<7> An electrode, comprising:

a current collector; and
a solid material of the composition for an electrode according to any one of <1> to <6>.

<8> A battery, comprising the electrode according to <7>

According to the disclosure, there are provided: a composition for an electrode capable of inhibiting an increase in the resistance of a battery after high-temperature storage; an electrode; and a battery.

BRIEF DESCRIPTION OF DRAWINGS

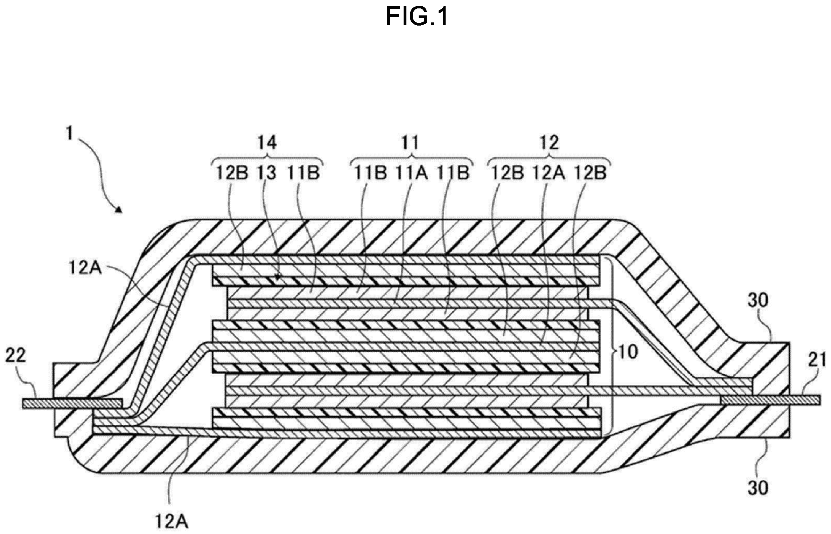

[FIG. 1] FIG. 1 is a schematic cross-sectional view illustrating a laminate-type battery that is one example of the battery of the disclosure.

DESCRIPTION OF EMBODIMENTS

In the present specification, those numerical ranges that are expressed with "to" each denote a range that includes the numerical values stated before and after "to" as the lower limit value and the upper limit value, respectively.
In the present specification, when there are plural substances that correspond to a component of a composition, an indicated amount of the component in the composition means, unless otherwise specified, a total amount of the plural substances existing in the composition.
In the present specification, "(meth)acrylate" refers to acrylate or methacrylate.

(1) Composition for Electrode

The composition for an electrode of the disclosure (hereinafter, also simply referred to as a "composition for an electrode") contains a polymer (A). The polymer (A) contains a structural unit (a). The structural unit (a) is derived from a compound that has a five-membered or six-membered nitrogen-containing heterocyclic structure containing an unsaturated bond (this compound is hereinafter also referred to as "monomer (a)"). A ratio of the structural unit (a) in the polymer (A) with respect to a total amount of all structural units constituting the polymer (A) (this ratio is hereinafter also simply referred to as "the ratio of the structural unit (a)") is higher than 50% by mole.
The "unsaturated bond" refers to a double bond or a triple bond.
The "heterocyclic structure" refers to a cyclic structure constituted by carbon atoms and a heteroatom (e.g., nitrogen, oxygen, or sulfur).
In the disclosure, the term "content" and the term "added amount" are deemed to have substantially the same meaning.
The composition for an electrode of the disclosure has the above-described configuration and is, therefore, capable of inhibiting an increase in the resistance of a battery after high-temperature storage.
The composition for an electrode of the disclosure is used as a raw material for an electrode. The details of the electrode will be described below.

(1.1) Polymer (A)

The composition for an electrode contains a polymer (A). By this, when the composition for an electrode contains an active material (B), the polymer (A) adsorbs to and/or covers the surface of the active material (B) and can thereby inhibit the progress of the decomposition reaction of an electrolyte solution on the surface of the active material (B) when used in a battery. As a result, the composition for an electrode can inhibit an increase in the resistance of a battery after high-temperature storage.
The weight-average molecular weight of the polymer (A) is not particularly limited, and it is preferably 1,000 or more, more preferably 5,000 or more, still more preferably 10,000 or more. The weight-average molecular weight of the polymer (A) is preferably 1,000,000 or less, more preferably 800,000 or less, still more preferably 500,000 or less. The weight-average molecular weight can be measured using, for example, a gel permeation chromatograph ALLIANCE GPC-2000 manufactured by Waters Corporation.
The content of the polymer (A) with respect to the solid content of the composition for an electrode (hereinafter, also referred to as " polymer (A) content") is not particularly limited, and it is preferably from 0.01% by mass to 1.0% by mass. This allows the composition for an electrode to further inhibit an increase in the resistance of a battery after high-temperature storage.
From the standpoint of further inhibiting an increase in the resistance of a battery after high-temperature storage, the polymer (A) content is more preferably from 0.05% by mass to 0.8% by mass, still more preferably from 0.1% by mass to 0.6% by mass, particularly preferably from 0.2% by mass to 0.4% by mass.
When the composition for an electrode contains the below-described solvent (D), the "solid content of the composition for an electrode" refers to a total mass of the composition for an electrode excluding the solvent (D), while when the composition for an electrode does not contain the solvent (D), the "solid content of the composition for an electrode" refers to a total mass of the composition for an electrode.

(1.1.1) Structural Unit (a)

The polymer (A) contains a structural unit (a). The structural unit (a) is derived from a monomer (a).

Among monomers (a), examples of a compound that has a five-membered nitrogen-containing heterocyclic structure containing an unsaturated bond include vinylimidazole, vinylpyrrole, vinylindole, vinylpyrazole, vinylbenzimidazole, vinyl-1H-indazole, vinylpyrroline, vinylpyrazoline, vinyltriazole, vinyltetrazole, vinyloxazole, vinyloxazoline, vinylisoxazole, vinylisoxazoline, vinylthiazole, and vinylthiazoline.

Among monomers (a), examples of a compound that has a six-membered nitrogen-containing heterocyclic structure containing an unsaturated bond include vinylquinoline, vinylpyridine, vinylquinoline, and vinyltriazine.

These monomers (a) may be used singly, or in combination of two or more kinds thereof.

Particularly, the structural unit (a) preferably contains a structural unit derived from vinylimidazole, more preferably is a structural unit derived from vinylimidazole. By this, the composition for an electrode can further inhibit an increase in the resistance of a battery after high-temperature storage.

(1.1.2) Structural Unit (b)

The polymer (A) may or may not contain a structural unit (b). The structural unit (b) is derived from a compound (excluding the monomer (a)) that is copolymerizable with the monomer (a) (this compound is hereinafter also referred to as "monomer (b)"). When the polymer (A) does not contain the structural unit (b), the polymer (A) may be a homopolymer of the monomer (a) (ratio of structural unit (a): 100% by mole). When the polymer (A) contains the structural unit (b), the polymer (A) may be a copolymer of the monomer (a) and the monomer (b).

By incorporating the structural unit (b) into the polymer (A), when the composition for an electrode contains an active material (B), the polymer (A) adsorbs to and/or covers the surface of the active material (B) and can thereby inhibit the progress of the decomposition reaction of an electrolyte solution on the surface of the active material (B) when used in a battery. As a result, the composition for an electrode tends to further inhibit an increase in the resistance of a battery after high-temperature storage. This is presumably because, as compared to a case where the polymer (A) does not contain the structural unit (b), the polymer (A) further containing the structural unit (b) is more likely to adsorb to the surface of the active material (B) and function as a protective coating layer.

The monomer (b) is not particularly limited as long as it is a compound copolymerizable with the monomer (a). The monomer (b) may be, for example, a carboxyl group-containing unsaturated monomer or a salt thereof; a (meth)acrylic acid alkyl ester; an unsaturated monomer having an acidic phosphate group; a (meth)acrylamide or a derivative thereof; an ether sulfate-type ammonium salt; or a carbonyl group-containing unsaturated monomer.

Examples of the carboxyl group-containing unsaturated monomer or salt thereof include (meth)acrylic acid, maleic acid, maleic anhydride, itaconic acid, fumaric acid, crotonic acid, and acrylamidoglycolic acid. Examples of the salt include alkali metal salts (e.g., sodium and potassium), alkaline earth metal salts (e.g., calcium and magnesium), ammonium salts, and organic amine salts (monoethanolamine and triethanolamine).

Examples of the (meth)acrylic acid alkyl ester include hydroxyethyl (meth)acrylate, methyl (meth)acrylate, ethyl (meth)acrylate, (N,N-dimethylaminoethyl) (meth)acrylate, (*N,N*-diethylaminoethyl) (meth)acrylate, and aminoethyl (meth)acrylate.

Examples of the unsaturated monomer having an acidic phosphate group include 2-(meth)acryloyloxyethyl acid phosphate, 2-(meth)acryloyloxypropyl acid phosphate, 2-(meth)acryloyloxy-3-chloropropyl acid phosphate, and 2-(meth)acryloyloxyethyl phenyl phosphate.

Examples of the (meth)acrylamide or derivative thereof include (meth)acrylamide, methylene-bis(meth)acrylamide, *N*-methyl(*meth*)acrylamide, *N*-ethyl(*meth*)acrylamide, and *N,N-dimethyl(meth)acrylamide*.

The ether sulfate-type ammonium salt may be a commercially available product. Examples of the commercially available product of the ether sulfate-type ammonium salt include products manufactured by ADEKA Corporation (e.g., "SR-10", "SR-020", "SR-1025", and "SR-3025").

Examples of the carbonyl group-containing unsaturated monomer include vinylpyrrolidone, acrolein, diacetone (meth)acrylamide, vinyl methyl ketone, vinyl ethyl ketone, and vinyl butyl ketone.

The ratio of the structural unit (a) is higher than 50% by mole. The ratio of the structural unit (a) is preferably 60% by mole or higher. The ratio of the structural unit (a) is more preferably from 60% by mole to 100% by mole, still more preferably 70% by mole or higher but lower than 100% by mole, particularly preferably 80% by mole or higher but lower than 100% by mole, further preferably from 80% by mole to 99% by mole, still further preferably from 85% by mole to 99% by mole. When the ratio of the structural unit (a) is in the above-described range, the composition for an electrode can further inhibit an increase in the resistance of a battery after high-temperature storage as compared to a case where the ratio of the structural unit (a) is not in the above-described range.

When the polymer (A) does not contain the structural unit (b), the ratio of the structural unit (a) may be 100% by mole.

When the polymer (A) contains the structural unit (b), the ratio of the structural unit (a) and the ratio of the structural unit (b) in the polymer (A) with respect to a total amount of all structural units constituting the polymer (A) (this ratio is hereinafter also referred to as "the ratio of the structural unit (b)") are preferably in the below-described respective ranges.

From the standpoint of, for example, allowing the composition for an electrode to further inhibit an increase in the resistance of a battery after high-temperature storage, the ratio of the structural unit (a) is preferably 60% by mole or higher but lower than 100% by mole, more preferably 70% by mole or higher but lower than 100% by mole, still more preferably 80% by mole or higher but lower than 100% by mole, particularly preferably from 80% by mole to 99% by mole, further preferably from 85% by mole to 99% by mole.

The ratio of the structural unit (b) is selected as appropriate in accordance with the type of the structural unit (b) (i.e., the type of the monomer (b)) and the like. The ratio of the structural unit (b) is preferably higher than 0% by mole. From the standpoint of, for example, allowing the composition for an electrode to further inhibit an increase in the resistance of a battery after high-temperature storage, the ratio of the structural unit (b) is preferably higher than 0% by mole but 40% by mole or lower, more preferably higher than 0% by mole but 30% by mole or lower, still more preferably higher than 0% by mole but 20% by mole or lower, particularly preferably from 1% by mole to 20% by mole, further preferably from 1% by mole to 15% by mole.

(1.2) Active Material (B)

The composition for an electrode may also contain an active material (B). By this, a solid material of the composition for an electrode functions as an electrode composite layer. The term "electrode composite layer" used herein refers to at least one of a negative electrode composite layer or a positive electrode composite layer.

The active material (B) may be a negative electrode active material (B1), or may be a positive electrode active material (B2).

The shape of the active material (B) is not particularly limited and may be, for example, a fibrous shape, a spherical shape, or a flake shape. When the active material (B) is in the form of particles, the particle size of the active material (B) is not particularly limited. The particle size of the negative electrode active material (B1) is preferably from 5 $\mu$m to 20 $\mu$m. The particle size of the positive electrode active material (B2) is preferably from 5 $\mu$m to 15 $\mu$m.

The particles of the positive electrode active material (B2) have a primary particle size of preferably 2.0 $\mu$m or less, more preferably from 0.2 $\mu$m to 1.0 $\mu$m.

The particle size of the active material (B) refers to a particle size that corresponds to a cumulative volume of 50% from the small particle side (particle size distribution D50, median diameter) in a volume-based particle size distribution measured by a particle size distribution analyzer based on a laser diffraction-scattering method.

When the composition for an electrode contains the active material (B), the content of the active material (B) is not particularly limited, and it is preferably from 10% by mass to 99.9% by mass, more preferably from 30% by mass to 99% by mass, still more preferably from 50% by mass to 99% by mass, particularly preferably from 70% by mass to 99% by mass, with respect to the solid content of the composition for an electrode.

The active material (B) is selected as appropriate in accordance with, for example, the type of the battery and the intended use of the composition for an electrode, and may be any known active material.

The active material (B) of a case where the battery is a lithium ion secondary battery and the solid material of the composition for an electrode is used in an electrode composite layer will now be described.

(1.2.1) Negative Electrode Active Material (B1)

The negative electrode active material (B1) is not particularly limited as long as it is a substance capable of occluding and releasing lithium ions. The negative electrode active material (B1) may be, for example, a carbon-based compound, a silicon oxide, a metal (e.g., silicon, tin, or lithium), an alloy (e.g., a silicon alloy, a tin alloy, or a lithium alloy), or lithium titanate.

The "carbon-based compound" refers to a carbon material having a volume resistivity at 20°C of less than 40 $\Omega \cdot$cm, preferably less than 3 $\Omega \cdot$cm.

The "silicon oxide" refers to a compound represented by the following Formula (1).

Formula (1): $SiO_X$

[wherein, X represents 0.5 or more but less than 1.6]

Examples of the carbon-based compound include graphite and amorphous carbon materials. Examples of the graphite include artificial graphite and natural graphite (e.g., flake graphite, lump graphite, and earthy graphite). Examples of the amorphous carbon materials include hard carbon, cokes, mesocarbon microbeads (MCMB) calcined at 1,500°C or lower, and mesophase pitch carbon fibers (MCF).

The silicon oxide may be coated with amorphous carbon. The silicon oxide may be any known compound. With regard to the silicon oxide, reference can be made as appropriate to WO 2013/094668, JP-A No. 2016-143642, and the like.

The negative electrode active material (B1) may be used singly, or in combination of two or more kinds thereof.

Particularly, the negative electrode active material (B1) preferably contains a carbon-based compound, more preferably is a carbon-based compound. By this, as compared to a case where the negative electrode active material (B1) does not contain a carbon-based compound, a battery having both higher energy density and higher charge-discharge cycle durability can be achieved.

(1.2.2) Positive Electrode Active Material (B2)

The positive electrode active material (B2) is not particularly limited as long as it is a substance capable of occluding and releasing lithium ions, and may be adjusted as appropriate in accordance with the intended use and the like of the lithium ion secondary battery.

Examples of the positive electrode active material (B2) include a first oxide and a second oxide.

The first oxide contains lithium (Li) and nickel (Ni) as constituent metal elements.

The second oxide contains Li, Ni, and at least one metal element other than Li and Ni as constituent metal elements. Examples of the metal element other than Li and Ni include transition metal elements and main-group metal elements. The second oxide contains the metal element other than Li and Ni preferably in a ratio equivalent to or lower than that of Ni in terms of the number of atoms. The metal element other than Li and Ni may be, for example, at least one selected from the group consisting of Co, Mn, Al, Cr, Fe, V, Mg, Ca, Na, Ti, Zr, Nb, Mo, W, Cu, Zn, Ga, In, Sn, La, and Ce.

The positive electrode active material (B2) may be used singly, or in combination of two or more kinds thereof.

The positive electrode active material (B2) preferably contains a lithium-containing composite oxide represented by the following Formula (X) (hereinafter, may be referred to as "NCM"). The lithium-containing composite oxide (X) is advantageous in that it has a high energy density per unit volume and excellent thermal stability.

$$LiNi_aCo_bMn_cO_2 \qquad (X)$$

In Formula (X), each of a, b, and c independently represents a number larger than 0 but smaller than 1, and a sum of a, b, and c is from 0.99 to 1.00.

Specific examples of the NCM include $LiNi_{0.33}Co_{0.33}Mn_{0.33}O_2$, $LiNi_{0.5}Co_{0.3}Mn_{0.2}O_2$, $LiNi_{0.5}Co_{0.2}Mn_{0.3}O_2$, $LiNi_{0.6}Co_{0.2}Mn_{0.2}O_2$, and $LiNi_{0.8}Co_{0.1}Mn_{0.1}O_2$.

The positive electrode active material (B2) may also contain a lithium-containing composite oxide represented by the following Formula (Y) (hereinafter, may be referred to as "NCA").

$$Li_tNi_{1-x-y}Co_xAl_yO_2 \qquad (Y)$$

In Formula (Y), t represents a number from 0.95 to 1.15, x represents a number from 0 to 0.3, y represents a number from 0.01 to 0.2, and a sum of x and y is less than 0.5.

Specific examples of the NCA include $LiNi_{0.8}Co_{0.15}Al_{0.05}O_2$.

(1.3) Binder (C)

The composition for an electrode may contain a binder (C). By this, when the composition for an electrode contains the active material (B) and forms an electrode composite layer on a current collector, the binder (C) can bind the active material (B) to the electrode current collector.

The binder (C) may be, for example, carboxymethylcellulose (CMC), polyvinyl acetate, polymethyl methacrylate, nitrocellulose, a fluorine resin, or rubber particles.

Examples of the fluorine resin include polytetrafluoroethylenes (PTFE), polyvinylidene fluorides (PVDF), tetrafluoroethylene-hexafluoropropylene copolymers (FEP), and vinylidene fluoride-hexafluoropropylene copolymers.

Examples of the rubber particles include styrene-butadiene rubber (SBR) particles and acrylonitrile rubber particles.

The binder (C) may be used singly, or in combination of two or more kinds thereof.

When the composition for an electrode contains the binder (C), the content of the binder (C) is not particularly limited, and it is preferably from 0.1% by mass to 4% by mass with respect to the solid content of the composition for a battery.

(1.4) Solvent (D)

The composition for an electrode may also contain a solvent (D).

Examples of the solvent (D) include water and liquid media compatible with water.

When the solvent (D) contained in the composition for an electrode contains a liquid medium compatible with water, the applicability of the composition for an electrode to an electrode current collector is improved. Examples of the liquid medium compatible with water include alcohols, glycols, cellosolves, aminoalcohols, amines, ketones, amides (e.g., *N*-methylpyrrolidone), carboxylic acid amides, phosphoric acid amides, sulfoxides, carboxylic acid esters, phosphoric acid esters, ethers, and nitriles. When the composition for an electrode contains the positive electrode active material (B2) and the solvent (D), it is preferable to use N-methylpyrrolidone as the solvent (D).

When the composition for an electrode contains the solvent (D), the ratio of a total amount of solids with respect to a total amount of the composition for an electrode (hereinafter, also referred to as "solid concentration") is not particularly limited, and it is preferably 30% by mass or higher, more preferably 35% by mass or higher, still more preferably 40% by mass or higher. The solid concentration is preferably 95% by mass or lower, more preferably 90% by mass or lower, still more preferably 80% by mass or lower, particularly preferably 70% by mass or lower.

(1.5) Conductive Additive (E)

The composition for an electrode may also contain a conductive additive (E).

The conductive additive (E) may be any known conductive additive. The known conductive additive is preferably a conductive carbon material. Examples of the conductive carbon material include carbon blacks, conductive carbon fibers, and fullerenes. Examples of the conductive carbon fibers include carbon nanotubes, carbon nanofibers, and carbon fibers. Examples of natural graphite include flake graphite, bulk graphite, and earthy graphite.

The conductive additive (E) may be used singly, or in combination of two or more kinds thereof.

The conductive additive (E) may be a commercially available product. Examples of a commercially available product of carbon black include "SUPER-P" (manufactured by Timcal Ltd.). Examples of a commercially available product of flake graphite include "KS-6" (manufactured by TIMREX).

The content of the conductive additive (E) is not particularly limited, and it is preferably from 0.05% by mass to 5% by mass with respect to the solid content of the composition for an electrode.

(1.6) Additive (F)

The composition for an electrode may also contain an additive (F). By this, depending on the type of the additive (F), various functions can be imparted to the composition for an electrode. Examples of the additive (F) include thickeners, surfactants, dispersants, wetting agents, and antifoaming agents.

(1.7) Preferred Composition

The composition for an electrode preferably contains the active material (B) and the binder (C) in addition to the polymer (A). This allows the solid content of the composition for an electrode to function as an electrode composite layer of a battery.

When the composition for an electrode further contains the active material (B) and the binder (C), the active material (B) preferably contains a carbon-based compound, more preferably is a carbon-based compound. By incorporating a carbon-based compound into the active material (B), as compared to a case where the active material (B) does not contain a carbon-based compound, a battery having both higher energy density and higher charge-discharge cycle durability can be achieved.

(2) Electrode

The electrode of the disclosure includes a current collector and a solid material of the composition for an electrode of the disclosure.

The "electrode" refers to at least one of a positive electrode or a negative electrode of a battery.

When the composition for an electrode contains the solvent (D), the "solid material of the composition for an electrode" refers to a material that is obtained by removing the solvent (D) from the composition for an electrode and is in a solid state at room temperature (23°C), while when the composition for an electrode does not contain the solvent (D), the "solid material of the composition for an electrode" refers to a material that consists of the composition for an electrode and is in a solid state at room temperature (23°C). When the composition for an electrode contains the solvent (D), the solid material of the composition for an electrode is formed by, for example, applying and drying the composition for an electrode on a current collector. When the composition for an electrode does not contain the solvent (D), the solid material of the composition for an electrode is formed by, for example, applying a melt of the composition for an electrode onto a current collector and then cooling the melt.

The electrode of the disclosure has the above-described configuration and is, therefore, capable of inhibiting an increase in the resistance of a battery after high-temperature storage.

The solid material of the composition for an electrode may be formed on at least one of the main surfaces of a current collector.

The function of the solid material of the composition for an electrode depends on the raw materials of the composition for an electrode. When the composition for an electrode contains the active material (B), the solid material of the composition for an electrode may function as an electrode composite layer. When the composition for an electrode does not contain the active material (B), the solid material of the composition for an electrode may function as an undercoat layer that is interposed between a current collector and an electrode composite layer. A case where the solid material of the composition for an electrode functions as an electrode composite layer will now be described.

(2.1) Negative Electrode

The negative electrode includes a current collector (hereinafter, also referred to as "negative electrode current collector") and a negative electrode composite layer. The negative electrode composite layer is formed on at least one of the main surfaces of the negative electrode current collector.

Examples of the material of the negative electrode current collector include copper, aluminum, nickel, stainless steel (SUS), and nickel-plated steel.

The negative electrode composite layer is a solid material of the composition for an electrode of the disclosure. Specifically, the negative electrode composite layer preferably contains the polymer (A), the negative electrode active material (B1), and the binder (C). If necessary, the negative electrode composite layer may further contain at least one of the conductive additive (E) or the additive (F).

(2.2) Positive Electrode

The positive electrode includes a current collector (hereinafter, also referred to as "positive electrode current collector") and a positive electrode composite layer. The positive electrode composite layer is formed on at least one of the main surfaces of the positive electrode current collector.

Examples of the material of the positive electrode current collector include aluminum, nickel, stainless steel (SUS), and copper. The term "aluminum" used herein encompasses pure aluminum and aluminum alloys.

The positive electrode composite layer is a solid material of the composition for an electrode of the disclosure. Specifically, the positive electrode composite layer preferably contains the polymer (A), the positive electrode active material (B2), and the binder (C). If necessary, the positive electrode composite layer may further contain at least one of the conductive additive (E) or the additive (F).

(3) Battery

The battery of the disclosure includes the electrode of the disclosure.

The battery of the disclosure has the above-described configuration; therefore, an increase in the resistance of the battery after high-temperature storage is inhibited.

In the battery of the disclosure, the electrode of the disclosure is at least one of a positive electrode or a negative electrode. The type of battery is not particularly limited, and is selected as appropriate in accordance with the intended use of the battery. Examples of the type of the battery include lithium ion secondary batteries, manganese batteries, nickel-metal hydride batteries, nickel-cadmium batteries, nickel-zinc batteries, sodium-sulfur batteries, zinc-halogen batteries, and redox flow batteries.

A lithium ion secondary battery will now be described as one example of the battery of the disclosure.

(3.1) Lithium Ion Secondary Battery

The lithium ion secondary battery includes the electrode of the disclosure.

A lithium ion secondary battery generally includes an outer package, a positive electrode, a negative electrode, a separator, and an electrolyte solution. The outer package houses the positive electrode, the negative electrode, the separator, and the nonaqueous electrolyte solution. The separator separates the positive electrode and the negative electrode from each other.

In the lithium ion secondary battery of the disclosure, at least one of the positive electrode or the negative electrode is the electrode of the disclosure. When one of the positive electrode or the negative electrode in the lithium ion secondary battery of the disclosure is the electrode of the disclosure, the other of the positive electrode or the negative electrode may be any known electrode used in a lithium ion secondary battery.

A case where the positive electrode and the negative electrode are both the electrode of the disclosure will now be described.

(3.1.1) Outer Package

The shape and the like of the outer package are not particularly limited, and are selected as appropriate in accordance with the intended use and the like of the lithium ion secondary battery. The outer package is, for example, an outer package that includes a laminated film, or an outer package composed of a battery can and a battery can lid.

(3.1.2) Positive Electrode and Negative Electrode

The positive electrode is the positive electrode of the disclosure. The negative electrode is the negative electrode of the disclosure.

(3.1.3) Separator

The separator is, for example, a porous resin plate. Examples of the material of the porous resin plate include resins and nonwoven fabrics containing the resins. Examples of the resins include polyethylene (PE), polypropylene (PP), polymethylpentene (PMP), polyester, cellulose, and polyamide. Particularly, the separator is preferably a porous resin sheet having a monolayer or multilayer structure. The material of the porous resin sheet is mainly composed of one or more kinds of polyolefin resins. The thickness of the separator is preferably from 5 $\mu$m to 30 $\mu$m. The separator is preferably arranged between the positive electrode and the negative electrode.

(3.1.4) Nonaqueous Electrolyte Solution

The nonaqueous electrolyte solution contains an electrolyte and a nonaqueous solvent.

(3.1.4.1) Electrolyte

The electrolyte preferably contains at least one of a lithium salt containing fluorine (hereinafter, may be referred to as "fluorine-containing lithium salt") or a lithium salt not containing fluorine.

Examples of the fluorine-containing lithium salt include inorganic acid anion salts and organic acid anion salts.

Examples of the inorganic acid anion salts include lithium hexafluorophosphate ($LiPF_6$), lithium tetrafluoroborate ($LiBF_4$), lithium hexafluoroarsenate ($LiAsF_6$), and lithium hexafluorotantalate ($LiTaF_6$).

Examples of the organic acid anion salts include lithium trifluoromethane sulfonate ($LiCF_3SO_3$).

Thereamong, the fluorine-containing lithium salt is particularly preferably $LiPF_6$.

Examples of the lithium salt not containing fluorine include lithium perchlorate ($LiClO_4$), lithium tetrachloroaluminate ($LiAlCl_4$), and lithium decachlorodecaborate ($Li_2B_{10}Cl_{10}$).

When the electrolyte contains a fluorine-containing lithium salt, the content ratio of the fluorine-containing lithium salt is preferably from 50% by mass to 100% by mass, more preferably from 60% by mass to 100% by mass, still more preferably from 80% by mass to 100% by mass, with respect to a total amount of the electrolyte.

When the fluorine-containing lithium salt contains lithium hexafluorophosphate ($LiPF_6$), the content ratio of lithium hexafluorophosphate ($LiPF_6$) is preferably from 50% by mass to 100% by mass, more preferably from 60% by mass to 100% by mass, still more preferably from 80% by mass to 100% by mass, with respect to a total amount of the electrolyte.

When the nonaqueous electrolyte solution contains an electrolyte, the concentration of the electrolyte in the nonaqueous electrolyte solution is preferably from 0.1 mol/L to 3 mol/L, more preferably from 0.5 mol/L to 2 mol/L.

When the nonaqueous electrolyte solution contains lithium hexafluorophosphate ($LiPF_6$), the concentration of lithium hexafluorophosphate ($LiPF_6$) in the nonaqueous electrolyte solution is preferably from 0.1 mol/L to 3 mol/L, more preferably from 0.5 mol/L to 2 mol/L.

(3.1.4.2) Nonaqueous Solvent

The nonaqueous electrolyte solution generally contains a nonaqueous solvent.

Examples of the nonaqueous solvents include cyclic carbonates, fluorine-containing cyclic carbonates, chain carbonates, fluorine-containing chain carbonates, aliphatic carboxylic acid esters, fluorine-containing aliphatic carboxylic acid esters, γ-lactones, fluorine-containing γ-lactones, cyclic ethers, fluorine-containing cyclic ethers, chain ethers, fluorine-containing chain ethers, nitriles, amides, lactams, nitromethane, nitroethane, sulfolane, trimethyl phosphate, dimethyl sulfoxide, and dimethyl sulfoxide phosphate. These nonaqueous solvents may be used singly, or in combination of two or more kinds thereof.

Examples of the cyclic carbonates include ethylene carbonate (EC), propylene carbonate (PC), and butylene carbonate (BC).

Examples of the fluorine-containing cyclic carbonates include fluoroethylene carbonate (FEC), difluoroethylene carbonate (DFEC), and trifluoropropylene carbonate.

Examples of the chain carbonates include dimethyl carbonate (DMC), diethyl carbonate (DEC), ethyl methyl carbonate (EMC), methyl propyl carbonate (MPC), ethyl propyl carbonate (EPC), and dipropyl carbonate (DPC).

Examples of the fluorine-containing chain carbonates include methyl-2,2,2-trifluoroethylcarbonate.

Examples of the aliphatic carboxylic acid esters include methyl formate, methyl acetate, methyl propionate, methyl butyrate, methyl isobutyrate, methyl trimethylbutyrate, ethyl formate, ethyl acetate, ethyl propionate, ethyl butyrate, ethyl isobutyrate, and ethyl trimethylbutyrate.

Examples of the fluorine-containing aliphatic carboxylic acid esters include methyl difluoroacetate, methyl 3,3,3-trifluoropropionate, ethyl difluoroacetate, and 2,2,2-trifluoroethyl acetate.

Examples of the γ-lactones include γ-butyrolactone and γ-valerolactone.

Examples of the cyclic ethers include tetrahydrofuran, 2-methyltetrahydrofuran, tetrahydropyran, 1,3-dioxolane, 4-methyl-1,3-dioxolane, 1,3-dioxane, and 1,4-dioxane.

Examples of the chain ethers include 1,2-ethoxyethane (DEE), ethoxymethoxyethane (EME), diethyl ether, 1,2-dimethoxyethane, and 1,2-dibutoxyethane.

Examples of the fluorine-containing chain ethers include $HCF_2CF_2CH_2OCF_2CF_2H$, $CF_3CF_2CH_2OCF_2CF_2H$, $HCF_2CF_2CH_2OCF_2CFHCF_3$, $CF_3CF_2CH_2OCF_2CFHCF_3$, $C_6F_{13}OCH_3$, $C_6F_{13}OC_2H_5$, $C_8F_{17}OCH_3$, $C_8F_{17}OC_2H_5$, $CF_3CFHCF_2CH(CH_3)OCF_2CFHCF_3$, $HCF_2CF_2OCH(C_2H_5)_2$, $HCF_2CF_2OC_4H_9$, $HCF_2CF_2OCH_2CH(C_2H_5)_2$, and $HCF_{2C}F_2OCH_2CH(CH_3)_2$.

Examples of the nitriles include acetonitrile, glutaronitrile, adiponitrile, methoxyacetonitrile, and 3-methoxypropionitrile.

Examples of the amides include N,N-dimethylformamide.

Examples of the lactams include N-methylpyrrolidinone, N-methyloxazolidinone, and N,N-dimethylimidazolidinone.

The nonaqueous solvent preferably contains at least one selected from the group consisting of cyclic carbonates, fluorine-containing cyclic carbonates, chain carbonates, and fluorine-containing chain carbonates. In this case, a total ratio of the cyclic carbonates, the fluorine-containing cyclic carbonates, the chain carbonates, and the fluorine-containing chain carbonates is preferably from 50% by mass to 100% by mass, more preferably from 60% by mass to 100% by mass, still more preferably from 80% by mass to 100% by mass, with respect to a total amount of the nonaqueous solvent.

The nonaqueous solvent preferably contains at least one selected from the group consisting of cyclic carbonates and chain carbonates. In this case, a total ratio of the cyclic carbonates and the chain carbonates in the nonaqueous solvent is preferably from 50% by mass to 100% by mass, more preferably from 60% by mass to 100% by mass, still more preferably from 80% by mass to 100% by mass, with respect to a total amount of the nonaqueous solvent.

The content of the nonaqueous solvent is preferably 99% by mass or less, more preferably 97% by mass or less, still more preferably 90% by mass or less, with respect to a total amount of the nonaqueous electrolyte solution.

The content of the nonaqueous solvent is preferably 60% by mass or more, more preferably 70% by mass or more, with respect to a total amount of the nonaqueous electrolyte solution.

From the standpoint of further improving the dissociation of the electrolyte and the ion mobility, the nonaqueous solvent preferably has an intrinsic viscosity of 10.0 mPa·s or less at 25°C.

(3.1.4.3) Electrolyte Solution Additive

The nonaqueous solvent may also contain an electrolyte solution additive. By this, in a charge-discharge cycle of the lithium ion secondary battery, a side reaction that is not a natural battery reaction can be made unlikely to proceed. The "battery reaction" refers to a reaction that causes lithium ions to move in and out of the positive electrode and the negative electrode (intercalation). Examples of the side reaction include: a reductive decomposition reaction of the nonaqueous electrolyte solution by the negative electrode; an oxidative decomposition reaction of the nonaqueous electrolyte solution by the positive electrode; and elution of a metal element contained in the positive electrode active material.

The electrolyte solution additive is not particularly limited, and any known electrolyte solution additive, for example, any of the additives disclosed in JP-A No. 2019-153443, can be used as desired.

(3.2) One Example of Lithium Ion Secondary Battery

One example of the lithium ion secondary battery according to one embodiment of the disclosure will now be concretely described referring to FIG. 1. FIG. 1 is a cross-sectional view of a lithium ion secondary battery 1 according to one embodiment of the disclosure.

The lithium ion secondary battery 1 according to one embodiment of the disclosure is of a layered type. As illustrated in FIG. 1, the lithium ion secondary battery 1 includes a battery element 10, a positive electrode lead 21, a negative electrode lead 22, and an outer package 30. The battery element 10 is enclosed in the outer package 30. The outer package 30 is formed of a laminated film. The positive electrode lead 21 and the negative electrode lead 22 are each attached to the battery element 10. The positive electrode lead 21 and the negative electrode lead 22 are drawn out in the opposite direction to each other from the inside of the outer package 30 to the outside.

In the battery element 10, as illustrated in FIG. 1, a positive electrode 11, a separator 13, and a negative electrode 12 are disposed in layers. In the positive electrode 11, a positive electrode composite layer 11B is formed on both main surfaces of a positive electrode current collector 11A. In the negative electrode 12, a negative electrode composite layer 12B is formed on both main surfaces of a negative electrode current collector 12A.

As illustrated in FIG. 1, the positive electrode composite layer 11B formed on one of the main surfaces of the positive electrode current collector 11A of the positive electrode 11 and the negative electrode composite layer 12B formed on one of the main surfaces of the negative electrode current collector 12A of the negative electrode 12 adjacent to the positive electrode 11 face each other via the separator 13.

Inside of the outer package 30, a nonaqueous electrolyte solution is injected. The nonaqueous electrolyte solution is impregnated into the positive electrode composite layer 11B, the separator 13, and the negative electrode composite layer 12B. In the lithium ion secondary battery 1, a single unit cell layer 14 is formed by the positive electrode composite layer 11B, the separator 13, and the negative electrode composite layer 12B that are adjacent to one another.

In the present embodiment, the lithium ion secondary battery 1 is of a layered type; however, the disclosure is not limited thereto, and the lithium ion secondary battery 1 may be of, for example, a wound type. The lithium ion secondary battery 1 of a wound type is obtained by disposing the positive electrode, the separator, the negative electrode, and the separator on one another in this order, and winding the resultant in a layered form. The wound type encompasses a cylindrical shape and a prismatic shape.

In the present embodiment, as illustrated in FIG. 1, the directions in which the positive electrode lead 21 and the negative electrode lead 22 each protrude from the inside of the outer package 30 to the outside are opposite to each other with respect to the outer package 30; however, the disclosure is not limited to this mode. For example, the directions in which the positive electrode lead and the negative electrode lead each protrude from the inside of the outer package 30 to the outside may be the same with respect to the outer package 30.

EXAMPLES

Examples of the disclosure will now be described; however, the disclosure is not limited by the below-described Examples. Hereinafter, "added amount" means the content with respect to a total amount of a nonaqueous electrolyte solution to be eventually obtained, and "% by weight" means % by mass.

[1] Polymerization Examples

Polymerization Example 1 (Polyvinylpyrrolidone Homopolymer)

A reaction vessel equipped with a stirrer, a reflux condenser, a dropping device, and a thermometer was prepared. An aqueous monomer solution was prepared by mixing 75 parts by mass of 1-vinylpyrrolidone as a monomer (x) and 75 parts by mass of distilled water. To the reaction vessel, 309.5 parts by mass of distilled water was added, followed by heating to 80°C with stirring and purging with nitrogen. The internal temperature was maintained at 80°C, and 1.3 parts by mass of 4,4'-azobis(4-cyanovaleric acid) was added as a polymerization initiator, after which the aqueous monomer solution was continuously added dropwise into the reactor over a period of 2 hours. After the completion of the dropwise addition, aging was performed for 6 hours. The thus obtained aqueous solution was cooled to normal temperature, and distilled water was subsequently added to this aqueous solution to obtain an aqueous polymer solution. The solid concentration of the thus obtained aqueous polymer solution was 14.8% by weight.

The aqueous polymer solution of Polymerization Example 1 contained a polyvinylpyrrolidone homopolymer. 1-vinylpyrrolidone, which is a monomer (b) of the polyvinylpyrrolidone homopolymer, does not have a five-membered or six-membered nitrogen-containing heterocyclic structure containing an unsaturated bond.

Polymerization Example 2 (Polyvinylimidazole Homopolymer)

An aqueous polymer solution was obtained in the same manner as in Polymerization Example 1, except that 1-vinylpyrrolidone was changed to 1-vinylimidazole as the monomer (a).

The aqueous polymer solution of Polymerization Example 2 contained a polyvinylimidazole homopolymer as a polymer (A). 1-vinylimidazole, which is a monomer (a) of the polyvinylimidazole homopolymer, has a five-membered nitrogen-containing heterocyclic structure containing an unsaturated bond. Therefore, the polyvinylimidazole homopolymer of Polymerization Example 2 has a structural unit (a).

Polymerization Example 3 (Polyvinylimidazole Homopolymer)

A reaction vessel equipped with a stirrer, a reflux condenser, a dropping device, and a thermometer was prepared. An aqueous monomer solution was prepared by mixing 75 parts by mass of 1-vinylimidazole as a monomer (a) and 75 parts by mass of distilled water. To the reaction vessel, 279.5 parts by mass of distilled water and 2.5 parts by mass of a 35% aqueous hydrochloric acid solution were added, followed by heating to 80°C with stirring and purging with nitrogen. The internal temperature was maintained at 80°C, and 1.3 parts by mass of 4,4'-azobis(4-cyanovaleric acid) was added as a polymerization initiator, after which the aqueous monomer solution was continuously added dropwise into the reactor over a period of 2 hours. After the completion of the dropwise addition, aging was performed for 6 hours. The thus obtained aqueous solution was cooled to normal temperature, and distilled water was subsequently added to this aqueous solution to obtain an aqueous polymer solution. The solid concentration of the thus obtained aqueous polymer solution was 14.8% by weight.

The aqueous polymer solution of Polymerization Example 3 contained a polyvinylimidazole homopolymer as a polymer (A). Therefore, the polyvinylimidazole homopolymer of Polymerization Example 3 has a structural unit (a).

Polymerization Example 4 (Polyvinylimidazole Copolymer)

A reaction vessel equipped with a stirrer, a reflux condenser, a dropping device, and a thermometer was prepared. An aqueous monomer solution was prepared by mixing 67.5 parts by mass of 1-vinylimidazole as a monomer (a) and 7.5 parts by mass of 2-hydroxyethyl methacrylate as a monomer (b) with 75 parts by mass of distilled water. To the reaction vessel, 309.5 parts by mass of distilled water was added, followed by heating to 80°C with stirring and purging with nitrogen. The internal temperature was maintained at 80°C, and 1.3 parts by mass of 4,4'-azobis(4-cyanovaleric acid) was added as a polymerization initiator, after which the aqueous monomer solution was continuously added dropwise into the reactor over a period of 2 hours. After the completion of the dropwise addition, aging was performed for 6 hours. The thus obtained aqueous solution was cooled to normal temperature, and distilled water was subsequently added to this aqueous solution to obtain an aqueous polymer solution. The solid concentration of the thus obtained aqueous polymer solution was 14.8% by weight.

The aqueous polymer solution of Polymerization Example 3 contained a polyvinylimidazole copolymer as a polymer (A). 1-vinylimidazole, which is a monomer (a) of the polyvinylimidazole copolymer, has a five-membered nitrogen-containing heterocyclic structure containing an unsaturated bond. Therefore, the polyvinylimidazole copolymer of Polymerization Example 4 has a structural unit (a).

Polymerization Examples 5 to 12 (Polyvinylimidazole Copolymers)

Water-soluble polymers were obtained in the same manner as in Polymerization Example 4, except that 2-hydroxyethyl methacrylate used as the monomer (b) was changed as shown in Table 1, and that the ratio of the monomer (a) and the monomer (b) was changed as shown in Table 1.

The aqueous polymer solution of Polymerization Example 5 contained a polyvinylimidazole copolymer. 1-vinylimidazole, which is a monomer (a) of the polyvinylimidazole copolymer, has a five-membered nitrogen-containing heterocyclic structure containing an unsaturated bond, but the ratio of the monomer (a) was not higher than 50%.

The aqueous polymer solutions of Polymerization Examples 6 to 12 each contained a polyvinylimidazole copolymer as a polymer (A). 1-vinylimidazole, which is a monomer (a) of the polyvinylimidazole copolymer, has a five-membered nitrogen-containing heterocyclic structure containing an unsaturated bond. Therefore, the polyvinylimidazole copolymers of Polymerization Examples 5 to 12 each have a structural unit (a).

[2] Example 1

Composition for Electrode

A 5-L planetary disperser was used for slurry preparation.

A mixture was obtained by adding 450 parts by mass of "1%-CMC aqueous solution" as a binder (C) and a solvent (D) to 960 parts by mass of natural graphite as a negative electrode active material (B1) and 10 parts by mass of "SUPER-P" (material: conductive carbon, BET specific surface area: 62 $m^2/g$) as a conductive additive (E), and mixing the resultant for 30 minutes. A "1%-by-mass aqueous solution of carboxymethylcellulose (CMC)" refers to an aqueous solution in which the ratio of the mass of CMC as the binder (C) with respect to a total amount of the aqueous solution is 1% by mass.

After adding 300 parts by mass of the 1%-CMC aqueous solution to the thus obtained mixture and kneading the resultant for 30 minutes, 250 parts by mass of the 1%-CMC aqueous solution was further added, followed by 30-minute kneading.

To the resulting mixture, 200 parts by mass of the aqueous polymer solution of Polymerization Example 2 was added as a polymer (A) and a solvent (D), followed by 30-minute kneading.

To the thus obtained kneaded product, 50 parts by mass of a styrene-butadiene rubber (SBR) (40% emulsified liquid) was added as a binder (C), and the resultant was mixed for 30 minutes and then vacuum-degassed for 30 minutes. In this manner, a negative electrode composite slurry (i.e., a composition for an electrode) was obtained. This negative electrode composite slurry had a solid concentration of 44%.

Lithium Ion Secondary Battery (Layered-Type Battery)

As a lithium ion secondary battery, a layered-type battery for evaluating the heat generation rate was produced in the following manner.

[2.2.1] Negative Electrode

A die coater was used for slurry coating.

The above-obtained negative electrode composite slurry was applied and dried onto a portion of one side of a copper foil (thickness: 10 $\mu$m) used as a negative electrode current collector such that the coating mass after drying was 11.0 $mg/cm^2$. Subsequently, the negative electrode composite slurry was applied and dried onto a portion of the opposite side (uncoated surface) of the copper foil such that the coating mass was 11.0 $mg/cm^2$.

The thus obtained copper foil coated on both sides (total coating amount on both sides: 22.0 $mg/cm^2$) was dried in a vacuum-drying oven at 120°C for 12 hours.

The thus dried copper foil coated on both sides was pressed to a press density of 1.45 $\pm$ 0.05 $g/cm^3$ using a small press machine.

The thus pressed copper foil coated on both sides was slit such that an electrode coated area (31 mm $\times$ 42 mm) and a tab welding margin were obtained. In this manner, a negative electrode was obtained.

[2.2.2] Positive Electrode

A 5-L planetary disperser was used for slurry preparation.

After mixing 920 parts by mass of NMC532 (i.e., LiNi$_{0.5}$Mn$_{0.3}$Co$_{0.2}$O$_2$) as a positive electrode active material with 20 parts by mass of "SUPER-P" (conductive carbon, manufactured by Timcal Ltd.) as a conductive additive and 20 parts by mass of "KS-6" (flake graphite, manufactured by TIMREX) as another conductive additive for 10 minutes, 100 parts by mass of *N*-methylpyrrolidone (NMP) was added to the resultant, which was further mixed for 20 minutes.

Next, 150 parts by mass of a "8%-PVDF solution" (obtained by dissolving PVDF W#7200 manufactured by Kureha Corporation in NMP) was added, and the resultant was kneaded for 30 minutes, followed by a further addition of 150 parts by mass of the 8%-PVDF solution and subsequent 30-minute kneading. The "8%-PVDF solution" refers to a solution in which the ratio of the mass of PVDF (PVDF "W#7200", manufactured by Kureha Corporation) with respect to a total amount of the PVDF solution (solution: NMP) is 8%. Subsequently, 200 parts by mass of the 8%-PVDF solution was added, and the resultant was kneaded for 30 minutes. Then, 80 parts by mass of the solution dissolved in NMP was added, followed by 30-minute kneading. Thereafter, 27 parts by mass of NMP was added to adjust the viscosity, and the resultant was mixed for 30 minutes and then vacuum-degassed for 30 minutes.

In this manner, a positive electrode composite slurry having a solid concentration of 60% was obtained.

A die coater was used for slurry coating.

The positive electrode composite slurry was applied and dried onto a portion of one side of an aluminum foil (thickness: 20 $\mu$m, width: 200 mm) used as a positive electrode current collector such that the coating mass after drying was 19.0 $mg/cm^2$. Subsequently, the positive electrode composite slurry was applied and dried onto a portion of the opposite side (uncoated surface) of the aluminum foil such that the coating mass was 19.0 mg/cm$^2$ in the same manner.

The thus obtained aluminum foil coated on both sides (total coating amount on both sides: 38.0 mg/cm$^2$) was dried in a vacuum-drying oven at 130°C for 12 hours.

The thus dried aluminum foil coated on both sides was pressed to a press density of 2.9 ± 0.05 g/cm$^3$ using a 35-ton press machine.

The thus pressed aluminum foil coated on both sides was slit such that a coated part (40 mm × 29 mm) and a tab welding margin were obtained, whereby a positive electrode was obtained.

[2.2.3] Nonaqueous Electrolyte Solution

Ethylene carbonate (hereinafter, abbreviated as "EC") and ethyl methyl carbonate (hereinafter, abbreviated as "EMC") were mixed at EC:EMC = 30:70 (volume ratio) to prepare a mixed solvent as a nonaqueous solvent.

In this mixed solvent, LiPF$_6$ as an electrolyte was dissolved such that the concentration thereof in a nonaqueous electrolyte solution to be eventually obtained would be 1 mol/L (hereinafter, also referred to as "1 M"), and vinylene carbonate (VC) as an additive was dissolved such that the content thereof in the nonaqueous electrolyte solution to be eventually obtained would be 0.5% by mass. In this manner, a nonaqueous electrolyte solution was obtained.

[2.2.4] Layered-Type Battery Precursor

As a separator, a polyethylene porous film (50 mm × 50 mm) having a porosity of 45% and a thickness of 25 μm was prepared.

The negative electrode (front surface), the separator, the positive electrode (back surface/front surface), the separator, and the negative electrode (front surface) were sequentially disposed on one another and immobilized to obtain a layered body having 5 layers of positive electrodes and 6 layers of negative electrodes. Using an ultrasonic bonding machine, an aluminum tab serving as a positive electrode tab was bonded to the margin of the positive electrode of the thus obtained layered body, and a nickel tab serving as a negative electrode tab was bonded to the margin of the negative electrode. The layered body to which the positive electrode tab and the negative electrode tab were thus bonded was sandwiched between laminated sheets, and three sides of the resultant were heat-sealed, whereby a layered-type battery precursor formed of a laminated body was obtained. The thus obtained battery precursor had a battery capacity of 350 mAh in terms of discharge capacity.

The inside of the above-obtained laminated body was dried under reduced pressure in a vacuum dryer at 70°C for 12 hours. Into this laminated body dried under reduced pressure, 1.20 ± 0.05 parts by mass of the above-obtained nonaqueous electrolyte solution was injected from the remaining side that was not heat-sealed, and this remaining side was subsequently heat-sealed under vacuum, whereby a layered-type battery precursor (i.e., a layered-type battery before charging and discharging) was obtained.

[2.2.5] Layered-Type Battery

The thus obtained layered-type battery precursor was maintained in the atmosphere at 25°C for 24 hours, subsequently constant-current charged at 0.1 C (0.1 C-CC) for 3 hours, and then rested at 25°C for 12 hours.

Thereafter, the rested layered-type battery precursor was constant-current constant-voltage charged at 0.1 C (0.1 C-CCCV) up to 4.2 V (SOC: 100%), rested for 30 minutes, and then constant-current discharged at 0.1 C (0.1 C-CC) to 2.8 V, whereby a layered-type battery was obtained.

Evaluation

[2.3.1] Battery Resistance After High-Temperature Storage (Relative Value)

For the layered-type battery, the battery resistance was evaluated as follows.

The battery was charged at room temperature up to a constant voltage of 4.2 V and subsequently discharged at a constant current of 0.1 C and room temperature, and a first potential drop amount in the period of 10 seconds after the start of the discharge was measured.

Similarly, the battery after an activation treatment was charged at room temperature up to a constant voltage of 4.2 V and subsequently discharged at a constant current of 0.2 C and room temperature, and a second potential drop amount in the period of 10 seconds after the start of the discharge was measured.

The battery after an activation treatment was charged at room temperature up to a constant voltage of 4.2 V and subsequently discharged at a constant current of 0.5 C and room temperature, and a third potential drop amount in the period of 10 seconds after the start of the discharge was measured.

The battery after an activation treatment was charged at room temperature up to a constant voltage of 4.2 V and subsequently discharged at a constant current of 1.0 C and room temperature, and a fourth potential drop amount in the period of 10 seconds after the start of the discharge was measured.

From the thus measured first to fourth potential drop amounts during discharge at the respective current rates, the battery resistance (direct-current resistance; DC-IR) in the initial stage of discharge was calculated.

For the layered-type battery, the following evaluation was performed.

The battery was charged at room temperature up to a constant voltage of 4.2 V, and then stored in a 60°C thermo-hygrostat chamber for 28 days.

Thereafter, the battery was taken out and left to stand at room temperature for 2 hours, after which the battery resistance (direct-current resistance; DC-IR) was evaluated.

The battery resistance increase rate was calculated from the battery resistance before and after the storage.

The resistance increase rate of Example 1 was calculated taking the resistance increase rate of the below-described Comparative Example 1 as 100, and the thus obtained value was defined as "post-storage resistance increase rate (relative value)". An acceptable post-storage resistance increase rate (relative value) is less than 100.

[2.3.2] Nail Penetration Test (Relative Value)

For the layered-type battery, the following nail penetration test was conducted to evaluate the heat generation rate inside the battery at the time of a short circuit.

The layered-type battery produced above was constant-current constant-voltage charged at 0.1 C (0.1 C-CCCV) up to 4.2 V (SOC: 100%), and a nail penetration test was conducted. A nail of 3 mm in diameter and 15 mm in length, which had a tip angle of 30° and a bottomed hole of 0.6 mm in diameter, was covered with MACOR (registered trademark). Subsequently, a sheath-type K thermocouple having a sheath diameter of 0.5 mm and a sheath length of 200 mm (product number: IP10-K-0.5-200) was inserted to the vicinity of the nail tip to obtain a nail penetration test jig.

This nail penetration test jig and the layered-type battery were immobilized in a nail penetration tester (TYS-94DM45, manufactured by Toyo System Co., Ltd.), and the test jig was inserted into the middle of the battery (cell) at a speed of 1 mm/sec to cause a short circuit between the positive electrode and the negative electrode inside the battery container. In this process, the temperature inside the battery and the surface temperature were measured over time by the nail penetration test jig and the thermocouple fitted to the battery surface, respectively.

The heat generation rate of the battery was calculated as follows from the measurement results of the above-described nail penetration test. After the short circuit, the time at which the battery internal temperature increased by 0.2°C was defined as the heat generation start time T0 (sec), and one second after T0 was defined as T1 (sec). The battery internal temperature at T0 and the battery internal temperature at T1 were defined as H0 (°C) and H1 (°C), respectively, and the heat generation rate immediately after the short circuit was calculated using the following equation.

$$\text{Heat generation rate} = (H1 - H0)/(T1 - T0)$$

The heat generation rate of Example 1 was calculated taking the heat generation rate of the below-described Comparative Example 1 as 100, and the thus obtained value was defined as "nail penetration test (relative value)".

[3] Examples 2 to 11 and Comparative Examples 1 to 4

Evaluations were performed in the same manner as in Example 1, except that the type and the added amount of the polymer were changed as shown in Table 1. It is noted here that the nail penetration test was not conducted for Comparative Examples 2 and 3 and Examples 2, 3, and 5 to 11.

[Table 1]

| Polymerization Example | Polymer | | | | Added amount % by mass | Evaluation | |
|---|---|---|---|---|---|---|---|
| | Structural unit (a) | | Structural unit (b) | | | Nail penetration test (relative value) | Post-storage resistance increase rate (relative value) |
| | Monomer (a) | Ratio % by mole | Monomer (b) | Ratio % by mole | | | |
| Comparative Example 1 / - | - | - | - | - | - | 100 | 100 |
| Comparative Example 2 / Polymerization Example 1 | - | - | vinylpyrrolidone | 100 | 0.3 | - | 100.8 |
| Comparative Example 3 / Polymerization Example 1 | - | - | vinylpyrrolidone | 100 | 1.0 | - | 101.2 |
| Comparative Example 4 / Polymerization Example 5 | vinylimidazole | 50 | vinylpyrrolidone | 50 | 0.3 | - | 100.1 |
| Example 1 / Polymerization Example 2 | vinylimidazole | 100 | - | 0 | 0.3 | 74.0 | 97.4 |
| Example 2 / Polymerization Example 2 | vinylimidazole | 100 | - | 0 | 1.0 | - | 96.6 |
| Example 3 / Polymerization Example 3 | vinylimidazole | 100 | - | 0 | 0.3 | - | 98.5 |
| Example 4 / Polymerization Example 4 | vinylimidazole | 90 | hydroxyethyl methacrylate | 10 | 0.3 | 75.2 | 96.8 |
| Example 5 / Polymerization Example 6 | vinylimidazole | 90 | vinylpyrrolidone | 10 | 0.3 | - | 97.1 |
| Example 6 / Polymerization Example 7 | vinylimidazole | 70 | vinylpyrrolidone | 30 | 0.3 | - | 98.5 |
| Example 7 / Polymerization Example 8 | vinylimidazole | 90 | methacrylic acid | 10 | 0.3 | - | 97.2 |
| Example 8 / Polymerization Example 9 | vinylimidazole | 99 | methylenebis acrylamide | 1 | 0.3 | - | 96.8 |
| Example 9 / Polymerization Example 10 | vinylimidazole | 93 | ether sulfate-type ammonium salt | 7 | 0.3 | - | 97.2 |

| | Polymer | | | | | | | Evaluation | |
|---|---|---|---|---|---|---|---|---|---|
| | Polymerization Example | Structural unit (a) | | Structural unit (b) | | | Added amount | Nail penetration test (relative value) | Post-storage resistance increase rate (relative value) |
| | | Monomer (a) | Ratio % by mole | Monomer (b) | Ratio | | | | |
| | | | | | % by mole | % by mass | | | |
| Example 10 | Polymerization Example 11 | vinylimidazole | 90 | methacrylamide | 10 | 0.3 | | - | 96.8 |
| Example 11 | Polymerization Example 12 | vinylimidazole | 90 | 2-acryloyloxyethyl acid phosphate | 10 | 0.3 | | - | 95.1 |

In Table 1, "ether sulfate-type ammonium salt" means REASOAP "SR-10" manufactured by ADEKA Corporation, and "Added amount" means a ratio of the mass of the polymer (A) with respect to the solid content of the negative electrode composite slurry (i.e., the composition for an electrode).

The composition for an electrode of each of Comparative Examples 1 to 3 did not contain the polymer (A). In Comparative Example 4, the ratio of the structural unit (a) did not exceed 50% by mole. Therefore, in Comparative Examples 1 to 4, the post-storage resistance increase rate (relative value) was not less than 100. As a result, it was found that the composition for an electrode of each of Comparative Examples 1 to 4 was not a composition for an electrode capable of inhibiting an increase in the resistance of a battery after high-temperature storage.

The composition for an electrode of each of Examples 1 to 11 contained the polymer (A). The ratio of the polymer (A) was higher than 50% by mole. Therefore, in Examples 1 to 11, the post-storage resistance increase rate (relative value) was less than 100. As a result, it was found that the composition for an electrode of each of Examples 1 to 11 was a composition for an electrode capable of inhibiting an increase in the resistance of a battery after high-temperature storage.

The disclosure of Japanese Patent Application No. 2023-122890 filed on July 27, 2023, is incorporated herein by reference in its entirety.

All documents, patent applications, and technical standards described herein are incorporated herein by reference to the same extent as if each document, patent application, and technical standard were specifically and individually indicated to be incorporated by reference.

**Claims**

1. A composition for an electrode, comprising a polymer (A), wherein:

   the polymer (A) comprises a structural unit (a) derived from a compound that has a five-membered or six-membered nitrogen-containing heterocyclic structure containing an unsaturated bond, and
   a ratio of the structural unit (a) in the polymer (A) with respect to a total amount of all structural units constituting the polymer (A) is higher than 50% by mole.

2. The composition for an electrode according to claim 1, wherein the ratio of the structural unit (a) is 60% by mole or higher.

3. The composition for an electrode according to claim 1 or 2, wherein the structural unit (a) contains a structural unit derived from vinylimidazole.

4. The composition for an electrode according to any one of claims 1 to 3, further comprising an active material (B) and a binder (C).

5. The composition for an electrode according to claim 4, wherein the active material (B) contains a carbon-based compound.

6. The composition for an electrode according to any one of claims 1 to 5, wherein a content of the polymer (A) is from 0.01% by mass to 1.0% by mass with respect to a solid content of the composition for an electrode.

7. An electrode, comprising:

   a current collector; and
   a solid material of the composition for an electrode according to any one of claims 1 to 6.

8. A battery, comprising the electrode according to claim 7.

FIG.1

**EP 4 752 983 A1**

## INTERNATIONAL SEARCH REPORT

| International application No. |
|---|
| **PCT/JP2024/025665** |

| A. | CLASSIFICATION OF SUBJECT MATTER |
|---|---|

*H01M 4/62*(2006.01)i; *H01M 4/13*(2010.01)i; *H01M 4/139*(2010.01)i
FI:  H01M4/62 Z; H01M4/139; H01M4/13

According to International Patent Classification (IPC) or to both national classification and IPC

| B. | FIELDS SEARCHED |
|---|---|

Minimum documentation searched (classification system followed by classification symbols)

H01M4/62; H01M4/13; H01M4/139

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2004-127920 A (NEC TOKIN CORP.) 22 April 2004 (2004-04-22) | 1-4, 6-8 |
|   | claims, paragraphs [0034], [0087]-[0090] | |
| A | entire text | 5 |
| X | JP 2020-525615 A (HYDRO-QUEBEC, MURATA MANUFACTURING CO., LTD.) 27 August 2020 (2020-08-27) | 1-8 |
|   | claims, paragraphs [0067], [0093] | |
| X | JP 2001-223031 A (NGK INSULATORS LTD.) 17 August 2001 (2001-08-17) | 1-2, 4-5, 7-8 |
|   | claims, paragraph [0030], example 4 | |
| A | entire text | 3, 6 |
| X | JP 9-180705 A (YUASA CORP.) 11 July 1997 (1997-07-11) | 1-2, 5, 7-8 |
|   | paragraphs [0011]-[0013] | |
| A | entire text | 3-4, 6 |

☑ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 September 2024** | **01 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

20

# EP 4 752 983 A1

## INTERNATIONAL SEARCH REPORT

International application No.

**PCT/JP2024/025665**

### C. DOCUMENTS CONSIDERED TO BE RELEVANT

| Category* | Citation of document, with indication, where appropriate, of the relevant passages | Relevant to claim No. |
|---|---|---|
| X | JP 9-171814 A (RICOH COMPANY, LTD.) 30 June 1997 (1997-06-30) claims, paragraphs [0030], [0048] | 1-2, 5, 7-8 |
| A | entire text | 3-4, 6 |
| A | JP 2004-063423 A (MITSUBISHI CHEMICAL CORP.) 26 February 2004 (2004-02-26) entire text | 1-8 |

Form PCT/ISA/210 (second sheet) (July 2022)

21

## INTERNATIONAL SEARCH REPORT
### Information on patent family members

| International application No. |
| --- |
| **PCT/JP2024/025665** |

| Patent document cited in search report | | | Publication date (day/month/year) | Patent family member(s) | Publication date (day/month/year) |
| --- | --- | --- | --- | --- | --- |
| JP | 2004-127920 | A | 22 April 2004 | US       2004/0029003      A1<br>claims, paragraphs [0042],<br>  [0089]-[0092]<br>US       2008/0063940      A1<br>claims, paragraphs [0042],<br>  [0089]-[0092]<br>EP             1388906      A2<br>claims, paragraphs [0034],<br>  [0075]-[0078]<br>KR  10-2004-0014247       A<br>pp. 5, 11-12, 15-16<br>CN             1481042      A<br>pp. 2-3, 10, 19-20 | |
| JP | 2020-525615 | A | 27 August 2020 | US       2021/0147604      A1<br>claims, paragraph [0097],<br>  example 4<br>WO       2019/006560      A1<br>pp. 18-19, 26-28, 34-43<br>KR  10-2020-0027985       A<br>claims, paragraphs [0096],<br>  [0131]-[0143]<br>CN             111065658      A<br>claims, paragraphs [0116],<br>  [0150]-[0168] | |
| JP | 2001-223031 | A | 17 August 2001 | (Family: none) | |
| JP | 9-180705 | A | 11 July 1997 | (Family: none) | |
| JP | 9-171814 | A | 30 June 1997 | US             5900336      A<br>claims, examples 7, 23 | |
| JP | 2004-063423 | A | 26 February 2004 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004063423 A
- WO 2013094668 A
- JP 2016143642 A
- JP 2019153443 A
- JP 2023122890 A